# EUROPÄISCHE PATENTSCHRIFT

(11) **EP 3 549 847 B1**
(45) Veröffentlichungstag und Bekanntmachung des Hinweises auf die Patenterteilung: **24.05.2023**
(21) Anmeldenummer: 19167025.6
(22) Anmeldetag: 03.04.2019
(51) Int. Cl.: B62D 35/02, B60R 19/48, B60P 3/36, B62D 35/00, B60P 3/32

(54) **REISE- UND FREIZEITFAHRZEUG**
JOURNEY AND RECREATIONAL VEHICLE
VÉHICULE DE VOYAGE ET DE LOISIR

(30) Priorität: 05.04.2018 DE 102018108096
(43) Veröffentlichungstag der Anmeldung: 09.10.2019
(73) Patentinhaber: Hymer GmbH & Co. KG, 88339 Bad Waldsee (DE)
(72) Erfinder: Venter, Frank, 88212 Ravensburg (DE); Hein, Jochen, 88339 Bad Waldsee (DE)
(74) Vertreter: Waller, Stefan

(56) Entgegenhaltungen:
- DE-A1- 2 947 691
- DE-A1- 19 711 336
- DE-A1- 19 844 058
- US-A1- 2017 240 220

## Beschreibung

Die Erfindung betrifft ein Reise- oder Freizeitfahrzeug nach dem Oberbegriff des Anspruchs 1.

Reise- oder Freizeitfahrzeuge sind aus dem Stand der Technik hinlänglich bekannt. So kennt man ein derartiges Fahrzeug beispielsweise aus der DE 199 29 040 A1. Weiterhin ist in diesem Zusammenhang bekannt, eine Heckwanne vorzusehen, die als Stauraum, etc. ausgebildet sein kann.

Problematisch bei Reise- oder Freizeitfahrzeugen generell ist deren Fahrverhalten. Dies ergibt sich u.a. auch aufgrund der Dimensionen, d.h. Abmessungen sowie entsprechend hoher tatsächlicher Gewichte, die besondere Fähigkeiten eines Fahrers erfordern. Mitunter können Reise- oder Freizeitfahrzeuge erhebliche Risiken im Straßenverkehr darstellen.

Aus der DE 197 11 336 A1 ist ein Bodenaufbau für ein Kraftfahrzeug mit Luftkanälen bekannt.

Aus der DE 29 47 691 A1 ist ein Anhänger mit an seiner Unterseite im Heckbereich angeordneten Windleitflächen bekannt.

Es ist Aufgabe der Erfindung, das Fahrverhalten von Reise-oder Freizeitfahrzeugen mit einfachen konstruktiven Maßnahmen zu verbessern und somit deren Sicherheit für den Straßenverkehr zu erhöhen.

Zur Lösung der Aufgabe wird ein Reise- oder Freizeitfahrzeug mit den Merkmalen des unabhängigen Patentanspruchs 1 vorgeschlagen.

Als Diffusor können Wirkflächen im Unterbodenbereich eines Reise- oder Freizeitfahrzeugs zur Verbesserung der Aerodynamik durch eine Sogwirkung, d.h. der Bildung eines Unterdrucks, verstanden werden. Ein Diffusor wirkt derart, dass am Übergang vom waagerechten Boden zum Diffusor während der Fahrt ein kleiner Bereich verminderten Luftdrucks entsteht. Von beiden Seiten strömt Luft dort unter das Fahrzeug und bildet paarweise Wirbel, die in gegenläufiger Rotation durch den Diffusor strömen.

Somit sorgt der Diffusor durch seine vorzugsweise asymmetrische Form für eine Druckverteilung im Unterboden und damit für Abtrieb. Dadurch wird das Fahrverhalten signifikant verbessert, wodurch auch die Sicherheit im Straßenverkehr erhöht werden kann.

Dabei ist der zumindest eine Diffusor als Heckwanne ausgebildet, welche wenigstens eine Vertiefung umfasst, wobei die wenigstens eine Vertiefung ein Stauraumvolumen im Reise- oder Freizeitfahrzeug bildet.

Hierdurch wird durch Bereitstellung einer einzigen Baueinheit bzw. eines einzigen Bauteils einerseits ermöglicht, das Fahrverhalten des Reise- oder Freizeitfahrzeugs zu verbessern und gleichzeitig ein erhöhtes Stauraumvolumen zur Verfügung zu stellen. Hierdurch kann auch der Herstellungsprozess solcher Fahrzeuge vereinfacht werden.

Es kann vorgesehen sein, dass der zumindest eine Diffusor mehrere als Rippen ausgebildete aussteifende Elemente umfasst. Dies kann zu einer vorteilhaften Stabilitätserhöhung des Diffusors, insbesondere des den Diffusor bildenden Wannenbauteils führen.

Weiterhin kann vorgesehen sein, dass die als Rippen ausgebildeten aussteifenden Elemente entlang einer Fahrzeuglängsrichtung angeordnet sind. Dies kann die Wirkeigenschaften des Diffusors verbessern, da z. B. Strömungskanäle gebildet werden.

Überdies kann vorgesehen sein, dass die als Rippen ausgebildeten aussteifenden Elemente als Opferschicht des zumindest einen Diffusors ausgebildet sind. Hierdurch können Beschädigungen des Diffusors bzw. des Fahrzeugs vermieden werden, beispielsweise bei einem so genannten Aufsitzen des Fahrzeugs am Heck. Bevorzugt ist die Unterseite der Rippen dazu verstärkt ausgebildet oder die Rippen bestehen zumindest anteilig aus Vollmaterial.

Offenbart wird weiterhin eine Heckwanne für ein Reise-oder Freizeitfahrzeug, wobei vorgesehen ist, dass die Heckwanne die wenigstens eine Vertiefung aufweist, derart, dass die Heckwanne als Diffusor zur Erzeugung von Unterdruck unter dem Reise- oder Freizeitfahrzeug ausgebildet ist.

Eine derartig ausgestaltete Heckwanne, ermöglicht eine Druckverteilung im Unterboden und damit Abtrieb des Reise-oder Freizeitfahrzeuges. Dadurch wird das Fahrverhalten des Reise- oder Freizeitfahrzeuges signifikant verbessert, wodurch auch die Sicherheit im Straßenverkehr erhöht werden kann. Abtrieb kann in diesem Zusammenhang auch als Anpressdruck verstanden werden.

In einer Weiterbildung kann die Erfindung vorsehen, dass die Heckwanne zwischen zwei und zehn Vertiefungen, bevorzugt zwischen drei und sechs Vertiefungen aufweist.

Eine derartige Heckwanne ist in Bezug auf die Erzeugung von Unterdruck hinsichtlich der Verbesserung des Fahrverhaltens besonders effizient.

Um die Funktionalität der Heckwanne weiter zu erhöhen, kann in einer Weiterbildung der Erfindung auch vorgesehen sein, dass die Heckwanne ein Heizsystem oder Teile eines Heizsystems umfasst.

Nachstehend wird die Erfindung anhand von Zeichnungen näher erläutert. Hierbei zeigt:
Fig. 1: eine stark vereinfachte schematische Darstellung eines erfindungsgemäßen Reise- oder Freizeitfahrzeuges;
Fig. 2: einen Ausschnitt des in Fig. 1 gezeigte Reise- oder Freizeitfahrzeug in einer weiteren Darstellung.

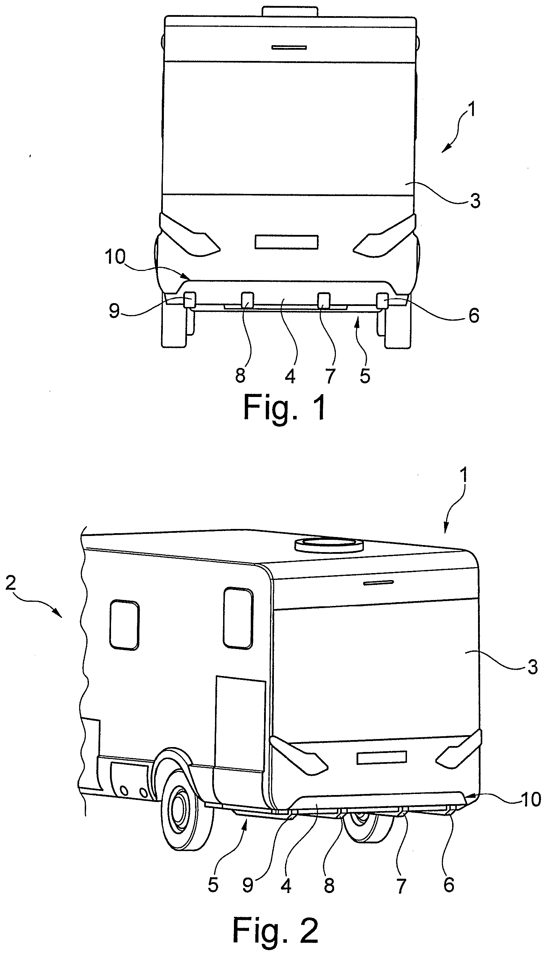

In der Fig. 1 ist ein als Wohnmobil ausgestaltetes Reise- oder Freizeitfahrzeug 1 dargestellt, dass einen Heckbereich 3 sowie einen Frontbereich (siehe Fig. 2) umfasst.

Das Reise- oder Freizeitfahrzeug 1 umfasst ferner einen Diffusor 4 umfasst, wobei der Diffusor 4 zur Erzeugung von Unterdruck unter dem Reise- oder Freizeitfahrzeug 1 in einem Unterbodenbereich 5 des Reise- oder Freizeitfahrzeugs 1 angeordnet ist (siehe auch Fig. 2).

Der Diffusor 4 ist als Heckwanne 10 ausgebildet, welche mehrere Vertiefungen 6, 7, 8, 9 umfasst, die ein Stauraumvolumen im Reise- oder Freizeitfahrzeug 1 bilden. Mit einer solchen Heckwanne 10 kann das Fahrverhalten des Reise-oder Freizeitfahrzeuges 1 aufgrund der Bereitstellung von Abtrieb verbessert werden.

### Bezugszeichenliste:

- 1: Reise- oder Freizeitfahrzeug
- 2: Frontbereich
- 3: Heckbereich
- 4: Diffusor
- 5: Unterbodenbereich
- 6: Vertiefung
- 7: Vertiefung
- 8: Vertiefung
- 9: Vertiefung
- 10: Heckwanne

## Patentansprüche

1. Reise- oder Freizeitfahrzeug (1), insbesondere Wohnmobil, Wohnanhänger oder dergleichen, umfassend einen Frontbereich (2) und einen Heckbereich (3), wobei das Reise- oder Freizeitfahrzeug (1) zumindest einen Diffusor (4) umfasst, wobei der zumindest eine Diffusor (4) zur Erzeugung von Unterdruck unter dem Reise-oder Freizeitfahrzeug (1) in einem Unterbodenbereich (5) des Reise-oder Freizeitfahrzeugs (1) angeordnet ist
**dadurch gekennzeichnet,**
**dass** der zumindest eine Diffusor (4) als Heckwanne (10) ausgebildet ist, welche wenigstens eine Vertiefung (6, 7, 8, 9) umfasst, wobei die wenigstens eine Vertiefung (6, 7, 8, 9) ein Stauraumvolumen im Reise- oder Freizeitfahrzeug (1) bildet.

2. Reise- oder Freizeitfahrzeug nach Anspruch 1,
**dadurch gekennzeichnet,**
**dass** der zumindest eine Diffusor (4) mehrere als Rippen ausgebildete aussteifende Elemente umfasst.

3. Reise- oder Freizeitfahrzeug nach Anspruch 2,
**dadurch gekennzeichnet,**
**dass** die als Rippen ausgebildeten aussteifenden Elemente entlang einer Fahrzeuglängsrichtung angeordnet sind.

4. Reise- oder Freizeitfahrzeug nach Anspruch 2 oder 3,
**dadurch gekennzeichnet,**
**dass** die als Rippen ausgebildeten aussteifenden Elemente als Opferschicht des zumindest einen Diffusors (4) ausgebildet sind.

5. Reise- oder Freizeitfahrzeug nach einem der vorhergehenden Ansprüche,
**dadurch gekennzeichnet,**
**dass** die Heckwanne (10) zwischen zwei und zehn Vertiefungen (6, 7, 8, 9), bevorzugt zwischen drei und sechs Vertiefungen (6, 7, 8, 9) aufweist.

## Claims

1. Touring or recreational vehicle (1), in particular a mobile home, caravan or the like, comprising a front region (2) and a rear region (3), wherein the touring or recreational vehicle (1) comprises at least one diffuser (4), wherein the at least one diffuser (4) is arranged under the touring or recreational vehicle (1) in an underfloor region (5) of the touring or recreational vehicle (1) in order to produce a negative pressure,
**characterized in that**
the at least one diffuser (4) is designed as a rear tray (10), which comprises at least one recess (6, 7, 8, 9), wherein the at least one recess (6, 7, 8, 9) forms a stowage volume in the touring or recreational vehicle (1) .

2. Touring or recreational vehicle according to Claim 1,
**characterized in that**
the at least one diffuser (4) comprises a plurality of stiffening elements formed as ribs.

3. Touring or recreational vehicle according to Claim 2,
**characterized in that**
the stiffening elements formed as ribs are arranged along a vehicle longitudinal direction.

4. Touring or recreational vehicle according to Claim 2 or 3,
**characterized in that**
the stiffening elements formed as ribs are designed as a sacrificial layer of the at least one diffuser (4).

5. Touring or recreational vehicle according to one of the preceding claims,
**characterized in that**
the rear tray (10) has between two and ten recesses (6, 7, 8, 9), preferably between three and six recesses (6, 7, 8, 9).

## Revendications

1. Véhicule de voyage ou de loisir (1), en particulier camping-car, caravane ou similaires, comprenant une zone avant (2) et une zone arrière (3), le véhicule de voyage ou de loisir (1) comprenant au moins un diffuseur (4), dans lequel ledit au moins un diffuseur (4) est disposé pour produire une dépression sous le véhicule de voyage ou de loisir (1) dans une zone sous-plancher (5) du véhicule de voyage ou de loisir (1),
**caractérisé en ce que** ledit au moins un diffuseur (4) est réalisé sous la forme d'un carter arrière (10) qui comprend au moins un creux (6, 7, 8, 9), ledit au moins un creux (6, 7, 8, 9) constituant un volume de rangement dans le véhicule de voyage ou de loisir (1).

2. Véhicule de voyage ou de loisir selon la revendication 1, **caractérisé en ce que** ledit au moins un diffuseur (4) comprend plusieurs éléments de renforcement réalisés sous forme de nervures.

3. Véhicule de voyage ou de loisir selon la revendication 2, **caractérisé en ce que** les éléments de renforcement réalisés sous forme de nervures sont disposés le long d'une direction longitudinale du véhicule.

4. Véhicule de voyage ou de loisir selon la revendication 2 ou 3, **caractérisé en ce que** les éléments de renforcement réalisés sous forme de nervures sont réalisés sous la forme d'une couche sacrificielle du au moins un diffuseur (4).

5. Véhicule de voyage ou de loisir selon l'une quelconque des revendications précédentes, **caractérisé en ce que** le carter arrière (10) présente entre deux et dix creux (6, 7, 8, 9), de préférence entre trois et six creux (6, 7, 8, 9).
